# EUROPÄISCHE PATENTANMELDUNG

(11) **EP 1 843 102 A1**
(43) Veröffentlichungstag der Anmeldung: **10.10.2007**
(21) Anmeldenummer: 07006782.2
(22) Anmeldetag: 31.03.2007
(51) Int. Cl.: F24D 3/14

(54) **Halteschiene**

(30) Priorität: 07.04.2006 AT 2792006 U
(71) Anmelder: Zainzinger, Edwin, 6091 Birgitz (AT)
(72) Erfinder: Zainzinger, Edwin, 6091 Birgitz (AT)
(74) Vertreter: Hofmann, Ralf U.

(57) **Zusammenfassung**

Ein Bodenaufbau umfasst eine Dampfsperr-Folie (3) und mindestens einen oberhalb dieser angeordneten Bodenheizungsschlauch (2), der von Halteschienen (1) gehalten ist, die an der Dampfsperr-Folie (3) befestigt sind. An der jeweiligen Halteschiene (1) ist eine Folie (5) befestigt, die mit der Dampfsperr-Folie (3) verschweißt ist.

## Beschreibung

Die Erfindung bezieht sich auf einen Bodenaufbau umfassend eine Dampfsperr-Folie und mindestens einen oberhalb dieser angeordneten Bodenheizungsschlauch, der von Halteschienen gehalten ist, die an der Dampfsperr-Folie befestigt sind.

Halteschienen zur Festsetzung von Bodenheizungsschläuchen an einem Untergrund, insbesondere an einer Dampfsperr-Folie, sind beispielsweise in Form von Selbstklebeschienen bekannt. Solche Selbstklebeschienen weisen jedoch den Nachteil auf, dass sie auf staubigen Untergründen, die insbesondere auf Baustellen regelmäßig anzutreffen sind, nicht gut haften. Weiters ist es bekannt, Halteschienen aber auch die Bodenheizungsschläuche selbst mittels U-Haken am Untergrund anzuheften. Der Nachteil ist hierbei, dass Dampfsperr-Folien, auf denen die Halteschienen anzuordnen sind, beschädigt werden. Außerdem bieten beispielsweise Wärmedämmungen aus Styropor oder Tellwolle ebenfalls keinen guten Halt. In der Folge kann es bei beiden bekannten Ausbildungen von Halteschienen beim Auftragen eines Estrichs dazu kommen, dass die Halteschienen von ihren vorgesehenen Stellen verschoben werden und sich wegen der variablen Abstände der Bodenheizungsschlauch-Abschnitte zur zu heizenden Bodenoberfläche ungleichmäßig verteilte Wärmezonen ergeben. Wird speziell ein Fließestrich aufgetragen, so kann es zudem dazu kommen, dass die Halteschienen mit den von ihnen gehaltenen Bodenheizungsschläuchen mehr oder weniger aufschwimmen.

Aufgabe der Erfindung ist es, einen Bodenaufbau der eingangs genannten Art bereitzustellen, bei dem die Halteschiene einfach und dennoch zuverlässig auf der Dampfsperr-Folie festgesetzt werden kann, wobei die Herstellung der Halteschiene einfach und für die Massenproduktion geeignet ist. Erfindungsgemäß gelingt dies durch einen Bodenaufbau mit den Merkmalen des Anspruchs 1.

Erfindungsgemäß ist an der Halteschiene eine mit der Dampfsperr-Folie verschweißte Folie befestigt. Diese Folie kann beispielsweise mit der Halteschiene verklebt oder verschweißt sein. Dadurch wird eine zuverlässige Festsetzung der Halteschiene am Untergrund insbesondere an einer thermisch verschweißbaren Dampfsperr-Folie durch thermisches Verschweißen ermöglicht. Auf eine solche Weise am Untergrund festgesetzte Halteschienen schwimmen beim Auftragen von Fließestrich nicht auf.

Vorteilhafterweise weist die Halteschiene mindestens einen Basissteg auf, mit dem sich die Halteschiene auf der Dampfsperr-Folie abstützt. Der Basissteg ist mit einer mit der Dampfsperr-Folie verschweißbaren Folie fest verbunden, beispielsweise verklebt, die insbesondere an der Unterseite des Basissteges angebracht ist und beidseitig über den Basissteg seitlich vorsteht, und in diesen überstehenden Abschnitten mit der Dampfsperr-Folie verschweißt. Diese Verklebung kann bereits herstellerseitig ausgebildet werden.

Weiters ist es vorteilhaft, wenn die Halteschiene mindestens einen Haltesteg aufweist, der von dem mindestens einen Basissteg nach oben absteht. Der Haltesteg kann Haltemittel zum Halten des Bodenheizungsschlauches aufweisen.

In einer vorteilhaften Ausführungsform der Erfindung ist die Halteschiene U-förmig ausgebildet und weist somit zwei Haltestege auf, die seitlich der Länge nach am Basissteg angeordnet sind und mit diesem einstückig ausgebildet sind.

Weitere Vorteile und Einzelheiten der Erfindung werden im Folgenden anhand der beiliegenden Zeichnung erläutert. In dieser zeigen:
- Fig. 1: eine schematische Schrägsicht einer U-förmigen Halteschiene, die auf einem Untergrund befestigt ist gemäß einem ersten Ausführungsbeispiel der Erfindung;
- Fig. 2: eine Draufsicht auf einen mittels der Halteschiene verlegten Bodenheizungsschlauches.
- Fig. 3: einen Schnitt durch zwei benachtbart angeordnete Bodenteile mit einem Niveauunterschied, wobei entlang der Stoßlinie der beiden Untergründe eine T-förmige Halteschiene gemäß einer weiteren Ausführungsform angeordnet ist.
- Fig. 4: eine schematische Schrägsicht einer Ausführungsform eines Gerätes zum Verschweißen der mit dem Untergrund verschweißbaren Folie der Halteschiene.
- Fig. 5: eine vergrößerte Darstellung eines Ausschnittes aus Fig. 4; in der sichtbaren Heizkufe ein Heizelement angedeutet.
Die Figuren weisen unterschiedliche Maßstäbe auf.

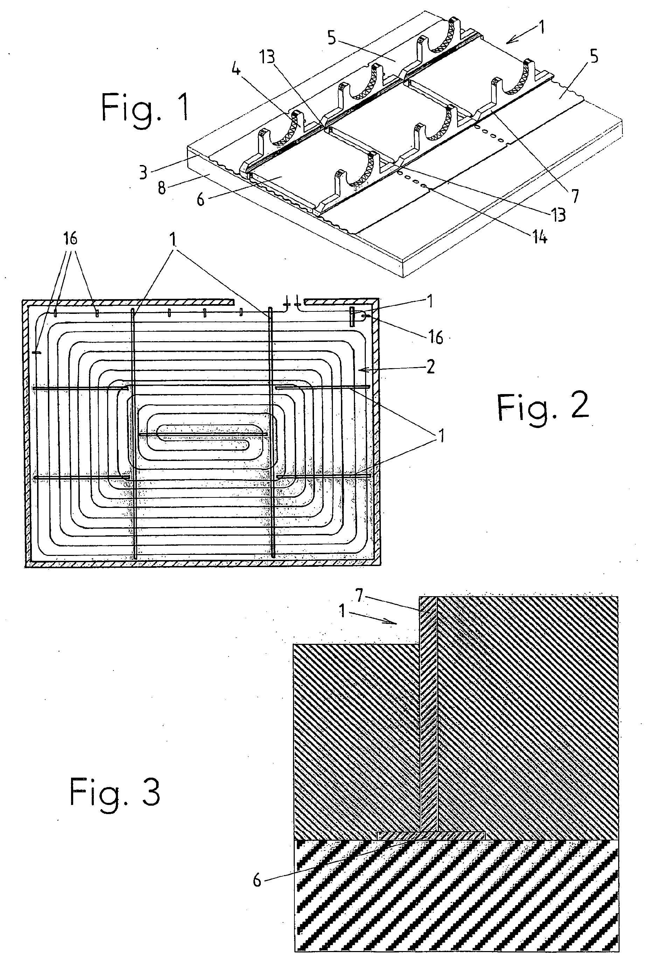

Eine Halteschiene 1 zur Festsetzung eines Bodenheizungsschlauches 2 an einem Untergrund gemäß einer Ausführungsform der Erfindung ist in Fig. 1 dargestellt.

Die Halteschiene 1 weist einen Basissteg 6 auf, der auf dem Untergrund aufliegt. Der Untergrund wird von einer Dampfsperr-Folie 3 gebildet, die ihrerseits auf einer Isolierung 8 aufliegt, z.B. auf Styroporplatten.

Dampfsperr-Folien 3 werden häufig thermisch miteinander verschweißbar ausgebildet, um an Stoßstellen miteinander verbunden werden zu können. Hierzu können sie beispielsweise mindestens eine Trägerlage aus einem nicht schmelzbaren Material (zumindest nicht bis zu Temperaturen um die 200° C schmelzend), z.B. aus Papier oder Karton und beidseitig hiervon mindestens eine Lage aus einem thermoplastischen Kunststoff aufweisen, welche jeweils die äußere Oberfläche der Dampfsperr-Folie 3 bildet. Eine oder mehrere Zwischenschichten, z.B. Aluminium, können zusätzlich vorhanden sein. Solche Dampfsperr-Folien 3 sind bekannt.

Am Basissteg 6 der Halteschiene 1 ist zur Befestigung der Halteschiene 1 an der Dampfsperr-Folie 3 eine mit der Dampfsperr-Folie 3 verschweißbare Folie 5 befestigt, vorzugsweise an der Unterseite des Basissteges 6. Die Verbindung des Basissteges 6 mit der Folie 5 kann beispielsweise durch Verkleben erfolgen. Auch ein thermisches Verschweißen der Folie 5 mit der Unterseite des Basissteges 6 ist denkbar und möglich.

Diese Folie 5 kann beispielsweise aus mindestens zwei Schichten in der Art eines Sandwich aufgebaut sein. In der Regel sind mindestens eine Trägerschicht, welche bis zu einer Temperatur bis ca. 200° C nicht schmilzt, und mindestens eine thermoplastische Kunststoff-Schicht vorhanden, die die untere Oberfläche der Folie 5 bildet. Die Trägerschicht kann beispielsweise aus Papier oder Karton bestehen. Die Folie 5 kann beispielsweise den gleichen Aufbau wie eine herkömmliche thermisch verschweißbare Dampfsperr-Folie 3 aufweisen.

Die Halteschiene 1 weist in der gezeigten Ausführungsform zwei Haltestege 7 auf, die jeweils seitlich entlang des Basissteges 6 angeordnet sind. Sie sind mit diesem einstückig ausgebildet. Es ist jedoch denkbar und möglich, Basissteg 6 und Haltestege 7 als getrennte Einzelteile auszubilden und im Zuge der Herstellung in geeigneter Weise miteinander zu verbinden.

Die beiden Haltestege 7 stehen von dem Basissteg 6 nach oben ab. Sie sind im Ausführungsbeispiel im Verhältnis zur Gesamthöhe der Halteschiene 1 niedriger ausgeführt. In Abständen sind auf diesen Haltestegen 7 Haltemittel (Halteelemente) 4 in Form von Klemmpratzen angeordnet, die zur form- und/oder reibschlüssigen Halterung des Bodenheizungsschlauches 2 dienen. Im gezeigten Ausführungsbeispiel sind diese C-förmig ausgebildet und einstückig mit den Haltestegen 7 verbunden. In die Ausnehmungen der Haltmittel ist der Bodenheizungsschlauch 2 einschnappbar. Es ist beispielsweise auch denkbar und möglich Haltestege 7 von im Wesentlichen gleicher Höhe wie die Halteschiene 1 auszubilden. Hierbei können die Haltemittel (Halteelemente) 4 in Form von Aussparungen in den Haltestegen 7 selbst ausgebildet sein, in die der Bodenheizungsschlauch 2 einschnappbar ist.

In der gezeigten Ausführungsform weist die Halteschiene 1 in Abständen Sollbruchstellen 13 auf. Sie dienen zum Zurichten von Halteschienen-Abschnitten von gewünschter Länge.

Im Bereich unterhalb der Sollbruchstellen 13 weist die mit der Dampfsperr-Folie 3 verschweißbare Folie 5 jeweils eine Perforation 14 auf. Diese Perforation 14 erlaubt ein sauberes Trennen der beispielsweise durch Brechen an den Sollbruchstellen 13 separierten Halteschienen-Abschnitte.

Zur Verlegung eines Bodenheizungsschlauches 2 werden z.B. mehrere rasterförmig angeordnete, einander kreuzende/schneidende Halteschienen 1 auf der Dampfsperr-Folie 3 verlegt und mit dieser thermisch verschweißt, beispielsweise mittels eines Heißluftföhns. Der Bodenheizungsschlauch 2 wird beginnend an einer Stelle am Außenrand der Dampfsperr-Folie 3 in einer nach innen zum Zentrum des Untergrundes verlaufenden Spirale in die Haltemittel (Halteelemente) 4 eingeklipst, wobei für den zurückzuführenden Abschnitt des Bodenheizungsschlauches 2 eine entsprechende Anzahl von Haltemitteln (Halteelementen) 4 frei gelassen werden. Vom Zentrum aus wird der Bodenheizungsschlauch 2 weiter in einer von innen nach außen verlaufenden Spirale zum Anfangsabschnitt des Bodenheizungsschlauches 2 zurückgeführt, wobei er in die frei gelassenen Haltemittel (Halteelemente) 4 eingeklipst wird (s. Fig. 2). Auch andere Verlegungsmuster können ausgebildet werden, beispielsweise solche, bei denen der Bodenheizungsschlauch 2 mäanderförmig verläuft.

In zwischen Halteschienen 1 bei der Verlegung entstandenen Bereichen können Halteteile 16 zum Befestigen des Bodenheizungsschlauches 2 am Untergrund, insbesondere an einer Dampfsperr-Folie 3, verwendet werden. Solche Halteteile 16 übergreifen die vom Untergrund abgewandte Oberseite des Bodenheizungsschlauches 2 und sind beidseitig des Bodenheizungsschlauches 2 am Untergrund befestigt. Beispielsweise werden die Halteteile 16 von Streifen aus einer thermisch verschweißbaren Folie gebildet, die beidseitig des Bodenheizungsschlauches 2 mit dem Untergrund thermisch verschweißt sind.

In einer weiteren Ausführungsform der Halteschiene 1 sind nur ein Basissteg 6 und nur ein von diesem nach oben abstehender Haltesteg 7, der die Haltemittel (Halteelemente) 4 aufweist, vorhanden. Vorteilhafterweise ist der Haltesteg 7 mittig auf dem Basissteg 6 und rechtwinkelig zu diesem angeordnet.

In dieser Ausführungsform kann die Halteschiene 1 auch zum Ausbilden von Trenn- oder Dehnungsfugen verwendet werden. Dabei kann mit der T-förmigen Halteschiene 1 sehr einfach eine Trenn- oder Dehnungsfuge zwischen zwei benachbart angeordneten Bodenteilen mit einem Niveauunterschied ausgebildet werden. Die Halteschiene 1 ist dann entlang der Stoßlinie der beiden Untergründe angeordnet (s. Fig. 3).

In einer weiteren Ausführungsform können Haltemittel 4 für die Bodenheizungsschläuche, beispielsweise in Form von Klemmpratzen auch direkt am Basissteg 6 angebracht sein.

Im gezeigten Ausführungsbeispiel ist die an der Halteschiene festgelegte thermisch verschweißbare Folie 5 streifenförmig ausgebildet und überragt den Basissteg 6 beidseitig. Sie könnte auch von einzelnen Folienteilen gebildet werden, die an der Unterseite des Basissteges 6 in Längsrichtung der Halteschiene beabstandet angebracht sind.

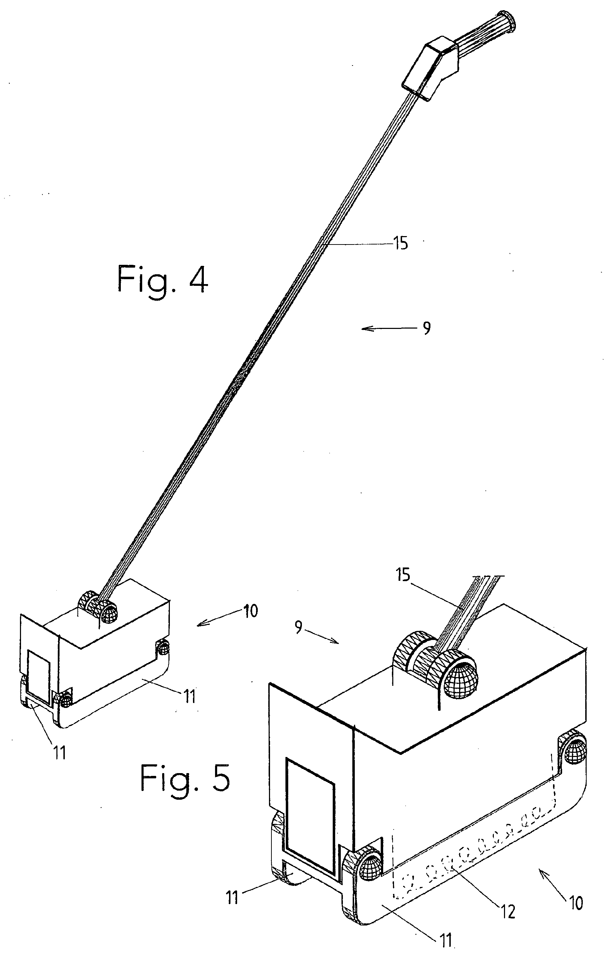

Zum Verschweißen der Halteschienen 1 mit der Dampfsperr-Folie 3 kann beispielsweise ein Gerät 9 mit Heizkufen 11 eingesetzt werden. Ein solches Gerät ist gemäß einer Ausführungsform in den Fig. 4 und 5 gezeigt. Das Gerät 9 weist an seiner Unterseite einen Schlitten 10 mit zwei Heizkufen 11 auf.

Die Heizkufen 11 werden zum Verschweißen der Folie 5 mit der Dampfsperr-Folie 3 beidseitig neben der Halteschiene 1 und auf der Folie 5 positioniert, wobei sie auf eine zum Verschweißen der Folie 5 mit der Dampfsperr-Folie 3 geeignete Temperatur (Verschweißtemperatur) aufgeheizt worden sind. Ein in einer jeweiligen Heizkufe 11 angeordnetes Heizelement 12 zum Aufheizen der Heizkufe ist in Fig. 5 angedeutet.

Beispielsweise mittels eines Stiels (vgl. Fig. 4) kann das Gerät mit heißen Heizkufen die Halteschiene entlang geführt/geschoben/gezogen werden, wobei die Folie 5 mit der Dampfsperr-Folie 3 verschweißt wird.

### Legende

- 1: Halteschiene
- 2: Bodenheizungsschlauch
- 3: Dampfsperr-Folie
- 4: Haltemittel
- 5: Folie
- 6: Basissteg
- 7: Haltesteg
- 8: Isolierung
- 9: Gerät
- 10: Schlitten
- 11: Heizkufe
- 12: Heizelement
- 13: Sollbruchstelle
- 14: Perforation
- 15: Stiel
- 16: Halteteil

## Patentansprüche

1. Bodenaufbau umfassend eine Dampfsperr-Folie (3) und mindestens einen oberhalb dieser angeordneten Bodenheizungsschlauch (2), der von Halteschienen (1) gehalten ist, die an der Dampfsperr-Folie (3) befestigt sind, **dadurch gekennzeichnet, dass** an der jeweiligen Halteschiene (1) eine Folie (5) befestigt ist, die mit der Dampfsperr-Folie (3) verschweißt ist.

2. Bodenaufbau nach Anspruch 1, **dadurch gekennzeichnet, dass** die Halteschiene mindestens einen Basissteg (6) aufweist, mit dem sie sich auf der Dampfsperr-Folie (3) abstützt.

3. Bodenaufbau nach einem der Ansprüche 1 oder 2, **dadurch gekennzeichnet, dass** die Halteschiene mindestens einen Haltesteg (7) aufweist, der von dem mindestens einen Basissteg (6) nach oben absteht und an dem Haltemittel (4) zur Halterung des Bodenheizungsschlauches (2) angeordnet sind.

4. Bodenaufbau nach Anspruch 2 oder 3, **dadurch gekennzeichnet, dass** die Halteschiene U-förmig ausgebildet ist, wobei zwei Haltestege (7) vom Basissteg (6) nach oben abstehen.

5. Bodenaufbau nach einem der Ansprüche 1 bis 3, **dadurch gekennzeichnet, dass** die Halteschiene T-förmig mit einem Basissteg (6) und einem auf diesem mittig angeordneten Haltesteg (7) ausgebildet ist, wobei der Haltesteg (7) Haltemittel (4) zur Halterung des Bodenheizungsschlauches (2) aufweist.

6. Bodenaufbau nach einem der Ansprüche 2 bis 5, **dadurch gekennzeichnet, dass** die mit der Dampfsperr-Folie (3) thermisch verschweißbare Folie (5) am Basissteg (6) angebracht ist, vorzugsweise an der Unterseite des Basissteges (6), und den Basissteg (6) beidseitig überragt.

7. Bodenaufbau nach einem der Ansprüche 1 bis 6, **dadurch gekennzeichnet, dass** die mit der Dampfsperr-Folie (3) thermisch verschweißbare Folie (5) als durchgehender Folienstreifen ausgebildet ist.

8. Bodenaufbau nach einem der Ansprüche 1 bis 7, **dadurch gekennzeichnet, dass** die Halteschiene (6) in Abständen Sollbruchstellen aufweist, wobei die mit der Dampfsperr-Folie (3) verschweißbare Folie (5) im Bereich dieser Sollbruchstellen jeweils eine Perforation aufweist.

9. Bodenaufbau nach einem der Ansprüche 1 bis 8, **dadurch gekennzeichnet, dass** die thermisch verscheißbare Folie (5) eine Trägerschicht, die einen Schmelzpunkt von mehr als 200° C besitzt, und mindestens eine Schicht aus einem thermoplastischen Kunststoff umfasst, welche die untere Oberfläche der Folie (5) bildet.

10. Bodenaufbau nach Anspruch 9, **dadurch gekennzeichnet, dass** die Trägerschicht aus Papier oder Karton besteht.

11. Bodenaufbau nach einem der Ansprüche 1 bis 10, **dadurch gekennzeichnet, dass** die Dampfsperr-Folie (3) auf einer Isolierung (8) aufliegt.

12. Gerät zum Verschweißen einer an einer Halteschiene (1) für einen Bodenheizungsschlauch (2) angebrachten Folie (5) mit einer Dampfsperr-Folie (3), insbesondere zur Ausbildung eines Bodenaufbaus nach einem der Ansprüche 1 bis 11 mit der Dampfsperr-Folie (3), **dadurch gekennzeichnet, dass** an der Unterseite des Gerätes (9) ein Schlitten (10) mit mindestens zwei Heizkufen (11) angeordnet ist, wobei die auf eine Verschweißtemperatur aufheizbaren Heizkufen (11) beidseitig der Halteschiene auf die auf der Dampfsperr-Folie (3) aufliegende Folie (5) der Halteschiene (1) aufsetzbar und die Halteschiene entlang führbar sind.
